# EUROPEAN PATENT APPLICATION

(11) **EP 1 288 807 A1**
(43) Date of publication of application: **05.03.2003**
(21) Application number: 01932275.9
(22) Date of filing: 25.05.2001
(51) Int. Cl.: G06F 17/60

(54) **METHOD FOR APPLYING TO TAKE EXAMINATION**

(30) Priority: 02.06.2000 JP 2000166092
(71) Applicant: Kabushiki Kaisha Nihon Toukei Jim Center, Kyoto-shi, Kyoto 615-8191 (JP)
(72) Inventor: OKUBO, Hiroshi, Kyoto-shi, Kyoto 616-8443 (JP)
(74) Representative: Schoppe, Fritz, Dipl.-Ing.
(86) International application number: JP0104417
(87) International publication number: WO01095181

(57) **Abstract**

The present invention provides a method for performing an examination procedure by which the examination procedure is quickly and securely performed by reducing many operations of examinees and examination implementor.

According to a method for performing an examination procedure according to the present invention, examination application data including at least information identifying an examinee, information specifying a desired examination date and information specifying a desired examination location is transmitted from an examination application terminal(12) to an examination procedure management server(34). The method includes a step of outputting an examination admission card when examination fee payment processing corresponding to the examination application data is completed, the examination admission card describing information identifying the examinee included in the examination application data corresponding to the completed examination fee payment processing.

## Description

### FIELD OF THE INVENTION

The present invention relates to a method for performing an examination procedure, and more particularly, to a method for quickly performing an examination procedure, for instance, via online processing.

### BACKGROUND ART

Conventionally, to perform an examination procedure for taking various examinations, such as a certification examination, a qualifying examination or a trial examination, it has been necessary for an examinee to first obtain application forms such as an application or an examination application issued by an examination implementor by requesting that the examination implementor send the forms directly to the examinee or by obtaining forms that have been distributed to, for example, a book store. The examinee provides information identifying him/her, such as his/her name or address, in the application form, selects and writes a predetermined examination date, examination location or other relevant information, and then returns the form to the examination implementor. At the same time, the examinee pays an examination fee by enclosing it together with the application form or transferring it via a financial institution. Thereafter, the examination implementor confirms the contents of the application form returned and the examination fee paid, and then dispatches an examination admission card to the examinee, whereby the examination procedure is completed.

However, the conventional method requires many steps to complete the examination procedure, such that the examinee must obtain an application form and return the form with the necessary information provided thereon to the examination implementor, and that, upon confirmation of the contents of the returned form, the examination implementor dispatches an examination admission card.

Therefore, the efficiency of the examination procedure is poor. For that reason, it has been impossible for an examinee to take the examination in a few days, and thus, it has been a serious problem that the examinees often lost the opportunity to take an examination to quickly acquire a qualification or certification.

Also excessive time and manpower were required by the examination implementor to confirm the contents of the application forms returned, confirm whether the examination fee corresponding to the application forms has been paid or not, and to prepare examination admission cards. Consequently, because of the excessive time and cost of the examination procedure, the examination fee could not be set to an amount which would allow an examinee to take examination without delay.

Accordingly, a main object of this invention is to provide a method for performing an examination procedure by which the examination procedure is quickly and securely performed by reducing many operations of examinees and examination implementor.

### DISCLOSURE OF THE INVENTION

The preferred embodiments of the present invention provide a method for performing an examination procedure over a network by utilizing an examination application terminal for performing an examination application and an examination procedure management server for processing the examination procedure, the method including a step of transmitting examination application data including at least information identifying an examinee, information specifying a desired examination date, information specifying a desired examination location and information specifying an examination fee payment method from the examination application terminal to the examination procedure management server, and a step of outputting an examination admission card when examination fee payment processing corresponding to the examination application data is completed, the examination admission card describing information identifying the examinee included in the examination application data corresponding to the examination fee payment processing being completed. In this case, an examination admission card is issued quickly after an examinee completes the application and examination fee payment.

Additionally, in preferred embodiments of the present invention, examination fee payment processing is preferably performed by utilizing electronic money transfer over networks. In this case, the payment processing is performed more quickly and securely.

Furthermore, in preferred embodiments of the present invention, the step of outputting the examination admission card when examination fee payment processing corresponding to the examination application data is completed, the examination admission card describing information identifying the examinee included in the examination application data corresponding to the examination fee payment processing being completed preferably includes a step of transmitting print data of the examination admission card which displays the information identifying the examinee on the examination application terminal, and a step of printing out the examination admission card based on the print data at the examination application terminal. In this case, because the time needed to deliver an examination admission card to an examinee is greatly reduced, the examination admission card is delivered to the examinee much more quickly.

Moreover, in preferred embodiments of the present invention, the examination application data preferably includes information specifying a mailing address of the examination admission card, and the step of outputting the examination admission card when the examination fee payment processing corresponding to the examination application data is completed, the examination admission card describing information identifying the examinee included in the examination application data corresponding to the examination fee payment processing being completed, includes a step of printing out the examination admission card in the examination procedure management server. In this case, an examination admission card is quickly delivered to even an examinee who cannot print out the examination admission card.

Another preferred embodiment of the present invention provides a method for performing an examination procedure over a network by utilizing an examination application terminal for performing examination application operations, an examination procedure management server for processing an examination procedure and a settlement terminal for performing examination fee payment processing, the method including a step of inputting examination application data including at least information identifying an examinee, information specifying a desired examination date and information specifying a desired examination location from the examination application terminal, a step of adding individual identification information that is unique and different from other individual identification information to the examination application data, a step of recording the examination application data with the identification information added thereto, a step of informing the examinee of the identification information, a step of inputting the identification information in the settlement terminal and at the same time, when examination fee payment processing is completed, transmitting payment data including the identification information and data indicating that the examination fee payment processing has been completed from the settlement terminal to the examination procedure management server, and a step of outputting an examination admission card describing the information identifying the examinee included in the examination application data corresponding to the payment data transmitted from the settlement terminal In this case, an examination admission card is issued very quickly after an examinee completes application and examination fee payment.

Additionally, the method according to preferred embodiments of the present invention preferably includes a step of transmitting the examination application data to the examination procedure management server, wherein the step of adding the individual identification information that is unique and different from each other to the examination application data and the step of recording the examination application data with the identification information added thereto is performed by the examination procedure management server. In this case, identification information is managed solely by an examination procedure management server.

Furthermore, in preferred embodiments of the present invention, the step of informing the examinee of the identification information is preferably performed by transmitting the identification information from the examination procedure management server to the examination application terminal. In this case, an examinee is informed of identification information very quickly.

Moreover, in preferred embodiments of the present invention, the step of adding the individual identification information that is unique and different from each other to the examination application data, the step of recording the examination application data with the identification information added thereto and the step of informing the examinee of the identification information are preferably performed in the examination application terminal. In addition, the method according to preferred embodiments of the present invention further preferably includes a step of transmitting the examination application data with the identification information added thereto to the examination procedure management server. In this case, the operation for adding identification information is performed more quickly than where identification information is added by an examination procedure management server.

In preferred embodiments of the present invention, the step of informing the examinee of the identification information preferably includes a step of printing out an examination fee payment sheet describing the identification information. In this case, an examinee will never incorrectly misunderstand or misrepresent identification information.

Moreover, in preferred embodiments of the present invention, the examination application data preferably includes information specifying a mailing address of an examination fee payment sheet, and the step of informing the examinee of the identification information further includes a step of sending the examination fee payment sheet to the examinee. In this case, an examination fee payment sheet is quickly delivered to even an examinee who cannot print out the examination fee payment sheet.

Additionally, in preferred embodiments of the present invention, the identification information may be described in the examination fee payment sheet in barcode form. In this case, identification information displayed in barcode form is read by an appropriate reading device such as a barcode scanner and thereby accurately inputted.

In preferred embodiments of the present invention, the step of outputting the examination admission card describing the information identifying the examinee included in the examination application data corresponding to the payment data transmitted from the settlement terminal preferably further includes a step of transmitting print data of an examination admission card that displays the information identifying the examinee to the examination application terminal and a step of printing out the examination admission card based on the print data at the examination application terminal. In this case, an examination fee payment sheet is delivered to an examinee even more quickly.

Additionally, in preferred embodiments of the present invention, the examination application data preferably includes information specifying mailing address of the examination admission card, and the step of outputting the examination admission card describing the information identifying the examinee included in the examination application data corresponding to the payment data transmitted from the settlement terminal preferably includes a step of printing out the examination admission card in a form that is formatted for the examination admission card that displays the information identifying the examinee and a step of sending the outputted examination admission card to the examinee. In this case, an examination admission card is quickly delivered to even an examinee who cannot print out the examination admission card.

In addition, the method according to preferred embodiments of the present invention preferably includes a step of extracting available examination dates and examination locations for the examinee to take examination, and transmitting result of the extraction to the examination application terminal. In this case, an examinee applies for examination previously recognizing suitable examination dates and convenient examination locations.

In preferred embodiments of the present invention, the step of inputting the examination application data further preferably includes a step of inputting data featuring an examinee's physical appearance such as a facial photograph. In this case, the operation of identifying an examinee is performed utilizing an examinee's physical appearance.

Furthermore, in preferred embodiments of the present invention, the data featuring the examinee's physical appearance may be included in the information identifying the examinee in the step of outputting the examination admission card describing the information identifying the examinee corresponding to the payment data received by the examination procedure management server. In this case, an examinee that is different from the examinee who performed the application procedure is prevented from taking an examination.

The foregoing and other objects, features and advantages of this invention will become more apparent from the following detailed description of the mode for carrying out the invention with reference to the attached drawings.

### BRIEF DESCRIPTION OF THE DRAWINGS

Fig. 1 is an illustrative drawing of an examination procedure control system according to a preferred embodiment of the present invention.
Fig. 2 is a block diagram of an examination application terminal.
Fig. 3 is an illustrative drawing of an application stored in a storage unit of the examination application terminal.
Fig. 4 is a block diagram of an examination procedure management server.
Fig. 5 is an illustrative drawing of an application stored in a storage unit of an examination procedure management server.
Fig. 6 is an illustrative drawing of data structure of an examination application database.
Fig. 7 is a block diagram of a settlement terminal.
Fig. 8 is a flow chart illustrating an example of an operation of a system to which a method for performing an examination procedure according to preferred embodiments of the present invention is applied.
Fig. 9 is an illustrative drawing of a screen displayed on an examinee terminal display.
Fig. 10 is another illustrative drawing of an image displayed on an examinee terminal display.
Fig. 11 is an illustrative drawing displaying a confirmation page in which items such as possible examination date are displayed.
Fig. 12 is an illustrative drawing displaying an examination application page.
Fig. 13 is an illustrative drawing displaying an examination fee payment sheet.
Fig. 14 is an illustrative drawing displaying an examination admission card.
Fig. 15 is a flow chart illustrating another example of an operation of a system to which a method for performing examination procedure according to preferred embodiments of the present invention is applied.
Fig. 16 is a flow chart illustrating still another example of an operation of a system to which a method for performing examination procedure according to preferred embodiments of the present invention is applied.
Fig. 17 is a flow chart illustrating an example of an operation of a system to which a method for performing examination procedure according to preferred embodiments of the present invention is applied.

### BEST MODE FOR CARRYING OUT THE INVENTION

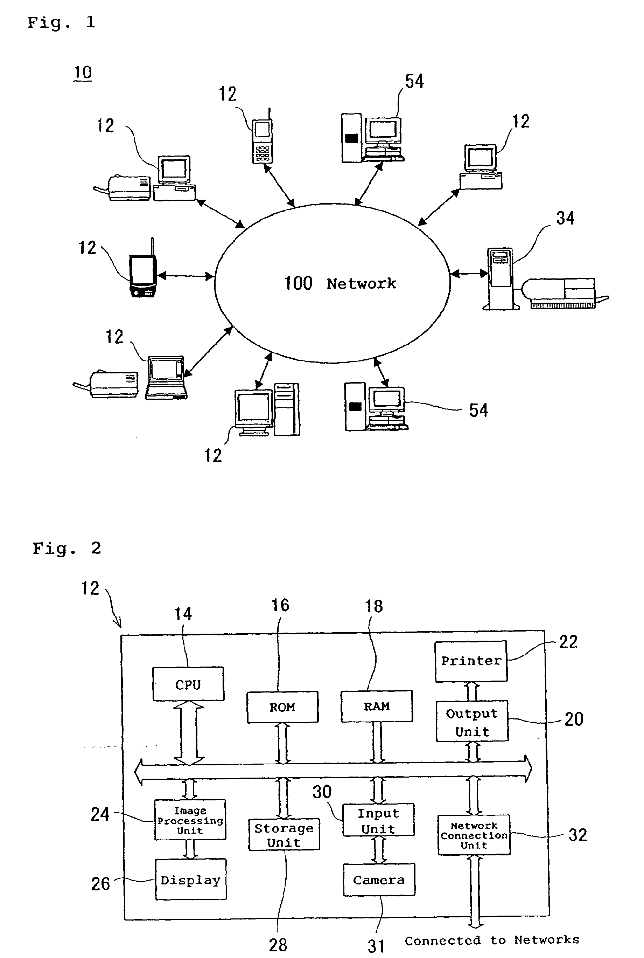

Fig. 1 is an illustrative drawing of a preferred embodiment of an examination procedure management system to which a method for performing an examination procedure according to the present invention is applied. A hardware configuration of an examination procedure management system 10 will be explained below with reference to Figs. 1 to 7.

The examination procedure management system 10 preferably includes examination application terminals 12, an examination procedure management server 34 and a settlement terminal 54. The examination application terminal 12 includes a CPU 14, as shown in Fig. 2. The CPU 14 is a central processing unit for performing arithmetic operations when executing various processing in the examination application terminal 12. A ROM 16 is connected to the CPU 14. The ROM 16 is a memory for storing a basic input/output processing program executed when activating the examination application terminal 12. Also, a RAM 18 is connected to the CPU 14.

The RAM 18 is a memory for temporarily storing programs or data used when various arithmetic operations are performed in the CPU 14.

Furthermore, an output unit 20 is connected to the CPU 14. The output unit 20 is an interface for outputting such data as print data to a printer 22 to be described later. The printer 22 is connected to the output unit 20. The printer 22 prints out print data for printed material such as an examination fee payment sheet or an examination admission card, the print data being transmitted from the examination procedure management server 34. The printer 22 may be, for example, a laser printer, an ink jet printer, a dot printer or a thermal transfer printer. Although in this preferred embodiment, the printer 22 is used to print out an examination fee payment sheet or an examination admission card. Where it is not necessary to print out an examination fee payment sheet, etc. in the examination application terminal 12, the printer 22 can be omitted.

An image processing unit 24 is connected to the CPU 14. The image processing unit 24 creates screen display data based on the result of arithmetic operations performed in the CPU 14. The image display data created in the image processing unit 24 is appropriately displayed as a screen via a display 26 connected to the image processing unit 24. Also, a storage unit 28 is connected to the CPU 14. The storage unit 28 stores programs or data that the CPU 14 uses when executing various processing and in addition, stores resultant data created by arithmetic operation performed in the CPU 14.

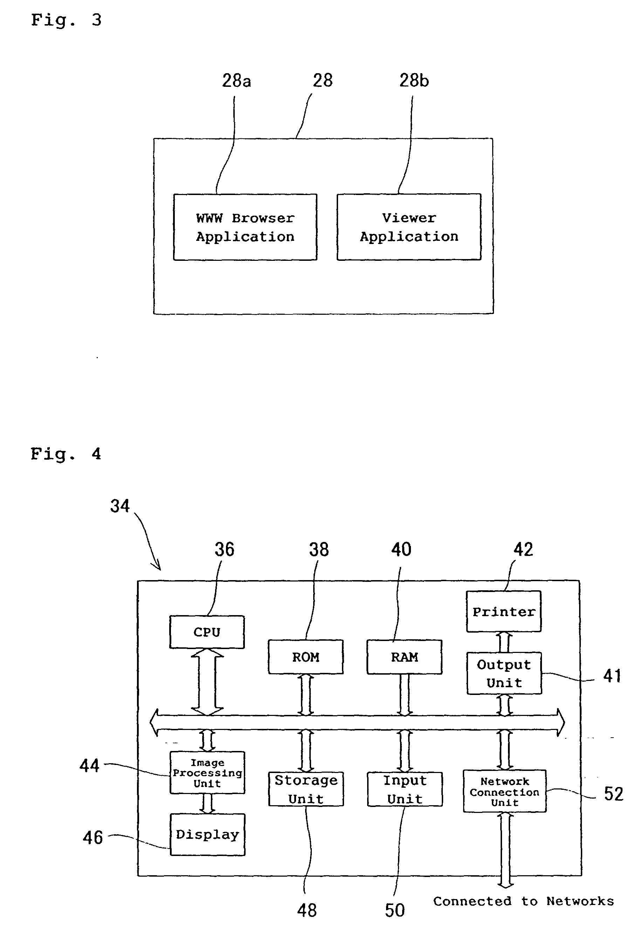

As shown in Fig. 3, a WWW browser application 28a and a viewer application 28b are recorded in the storage unit 28. The WWW browser application 28a is an application for making various data such as HTML data transmitted from the examination procedure management server 34 or other HTML data stored in the storage unit 28 viewable on the display 26, and thereby enabling confirmation of the data contents. The viewer application 28b is used to view the contents of the print of an examination fee payment sheet or an examination admission card, or to print out the print data. The viewer application 28b is recorded in the storage unit 28 such that it is previously downloaded from the examination procedure management system 10 before performing examination procedure, such that it is previously copied from a suitable storage medium for distribution storing the application, or such that it is downloaded during examination procedure. Furthermore, it is desirable to use a viewer application 28 by which a format of display and format of printing of printed matters do not vary according to the device used as the examination application terminal 12.

Also, an input unit 30 is connected to the CPU 14. The input unit 30 is an interface for connecting various input devices such as a later-described camera 31, although not shown, a mouse, a keyboard, a touch panel, a tablet or a scanner, and via the interface, various command signals or various data are input to the CPU 14. The camera 31 as described above is connected to the input unit 30. The camera 31 photographs the appearance of examinee's face. A CCD camera is preferably used as the camera 31. Although the camera 31 is connected to photograph the appearance of examinee's face, if identification of an examinee by face is not required the camera may be omitted. Furthermore, a network connection unit 32 is connected to the CPU 14. The network connection unit 32 is defined by a modem, a terminal adapter, a LAN card and the like. Moreover, a network 100 is connected to the network connection unit 32.

The above-described examination application terminal 12 is constructed to connect suitable supportive equipment, such as a printer and a camera to a computer, for example, a personal computer or a workstation, and install a suitable WWW browser application in the computer.

As shown in Fig. 4, the examination procedure management server 34 includes a CPU 36. The CPU 36 is a central processing unit for performing arithmetic operations when executing various processing in the examination procedure management server 34. A ROM 38 is connected to the CPU 36. The ROM 38 is a memory for storing a basic input/output processing program executed when activating the examination procedure management server 34. Also, a RAM 40 is connected to the CPU 36. The RAM 40 is a memory for temporarily storing programs or data used when various arithmetic operations are performed in the CPU 36.

Furthermore, an output unit 41 is connected to the CPU 36. The output unit 41 is an interface for outputting various data obtained as a result of the arithmetic operations performed by the CPU 36 to a later-described printer 42 and the like. As described above, the printer 42 is connected to the output unit 41. The printer 42 prints various print data obtained as a result of the arithmetic operations onto paper and the like. The printer 42 can be, for example, a laser printer, an ink jet printer, a dot printer or a thermal transfer printer. Although in this preferred embodiment, the printer 42 is used for printing out an examination fee payment sheet or an examination admission card. Where these printings are not required in the examination procedure management server 34, the printer 42 may be omitted.

An image processing unit 44 is connected to the CPU 36. The image processing unit 44 creates screen display data based on the result of arithmetic operations performed in the CPU 36. The image display data created in the image processing unit 44 is appropriately displayed as a screen via a display 46 connected to the image processing unit 44. Where there is no need to monitor the processing procedure performed in the examination procedure management server 34, the display 46 may be omitted.

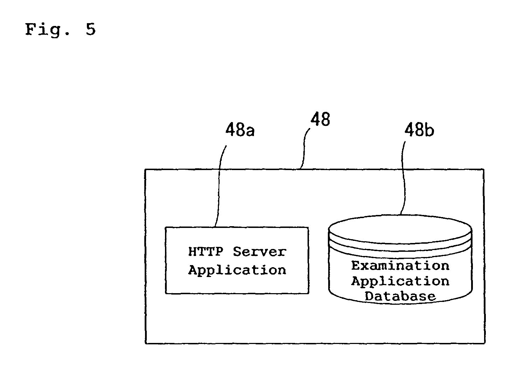

Also, a storage unit 48 is connected to the CPU 36. The storage unit 48 stores programs or data that the CPU 36 uses when executing various processing, and in addition, stores resultant data created by the arithmetic operations performed in the CPU 36. As shown in Fig. 5, in the storage unit 48, an HTTP server application 48a and an examination application database 48b are stored. The HTTP server application 48a is an application for transmitting various data requested from the examination application terminal 12 or receiving data sent from the examination application terminal 12 according to HTTP protocol.

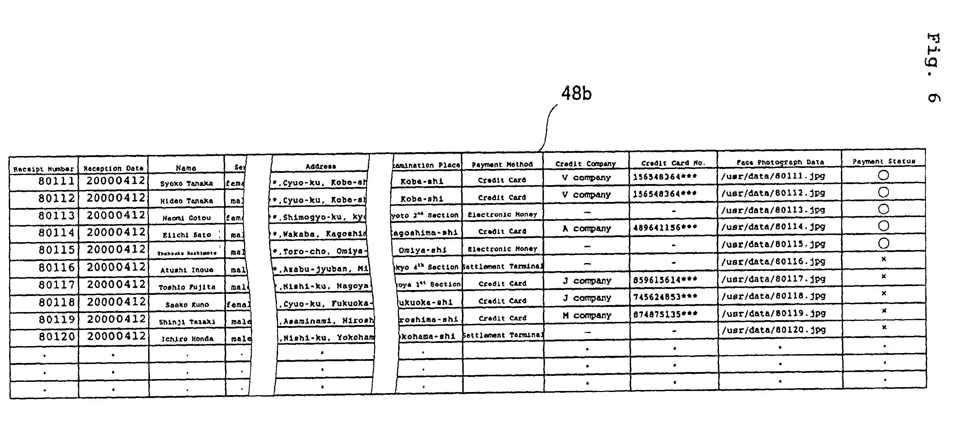

As shown in Fig. 6, the examination application database 48b is an application that stores examination application related data input by the examination application terminal 12 and the like to define a database. Furthermore, the examination application database 48b has search and extraction functions for extracting data from accumulated data according to optional criteria. In addition, the examination application database 48b records form data therein to print out examination application data, which is recorded within the database, according to a specified form. Moreover, the examination application database 48b creates print data that is made by incorporating print items such as an examinee's name, a receipt number and barcode form of the receipt number within the form data in a specified format via the internal processing or other processing performed by a macro-program, an add-in application or other suitable application, the print items varying according to the type of examination-related documents, i.e., an examination fee payment sheet or an examination admission card. The examination application database 48b operates within a certain range from examination application terminal 12 via CGI (Common Gateway Interface).

Furthermore, an input unit 50 is connected to the CPU 36. The input unit 50 is an interface for connecting various input devices such as, although not shown, a mouse, a keyboard, a tablet and a scanner, and via the interface, various command signals or data are input to the CPU 36. When the operation of inputting various data is not performed in the examination procedure management server 34, the input device such as a keyboard or a mouse is not connected to the input unit 50. In addition, a network connection unit 52 is connected to the CPU 36. The network connection unit 52 is defined by a modem, a terminal adapter, a LAN card and the like. Moreover, a network 100 is connected to the network connection unit 52.

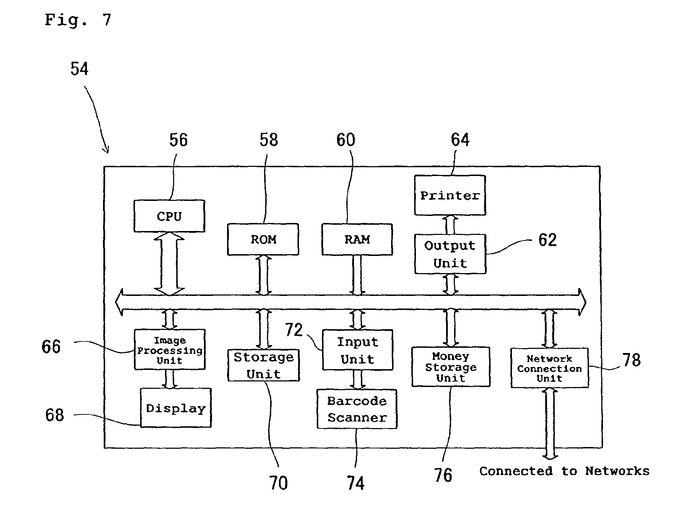

As shown in Fig. 7, the settlement terminal 54 includes a CPU 56. The CPU 56 is a central processing unit for performing arithmetic operations when executing various processing in the settlement terminal 54. A ROM 58 is connected to the CPU 56. The ROM 58 is a memory for storing a basic input/output processing program that is executed to activate the settlement terminal 54. Also, a RAM 60 is connected to the CPU 56. The RAM 60 is a memory for temporarily storing programs or data to be used when various arithmetic operations are performed in the CPU 56.

Furthermore, an output unit 62 is connected to the CPU 56. The output unit 62 is an interface for outputting various data obtained as a result of the arithmetic operations performed in the CPU 56 to a later-described printer 64 and the like. The printer 64 is connected to the output unit 62. The printer 64 prints various print data obtained, for instance, as a result of the arithmetic operations performed in the CPU 56 onto paper and the like, and is defined by, for instance, a laser printer, an ink jet printer, a dot printer or a thermal transfer printer.

An image processing unit 66 is connected to the CPU 56. The image processing unit 66 creates screen display data based on the result of arithmetic operations performed in the CPU 56. The image display data created in the image processing unit 66 is displayed as a screen on a display 68 connected to the image processing unit 66. Also, to the CPU 56 is connected a storage unit 70. The storage unit 70 stores programs or data that the CPU 56 uses when executing various processing and in addition, stores various resultant data created by the arithmetic operations performed in the CPU 56. Furthermore, the CPU 56 is connected to an input unit 72. The input unit 72 is an interface for connecting, for example, a later-described barcode scanner 74 or, although not shown, a mouse, a keyboard, a tablet, or a scanner, and via the interface, various command signals or data are inputted to the CPU 56.

The input unit 72 is connected to the barcode scanner 74. The barcode scanner 74 inputs a numeral string or character string into the CPU 56 by scanning the barcode. Also, the CPU is connected to a money storage unit 76. The money storage unit 76 is an apparatus for storing examination fees when they are paid and is designed to be activated by a command from the CPU 56. Furthermore, the CPU 56 is connected to a network connection unit 78. The network connection unit 78 is defined by a modem, a terminal adapter, a LAN card and the like. In addition, the network 100 is connected to the network connection unit 78.

In this preferred embodiment, the network 100 is defined by the Internet networks. However, the network 100 used in this invention is not limited to the Internet networks, and general public networks, ISDN networks, cellular phone networks, LAN networks, WAN networks or a combination of a plurality of networks selected from these networks may be used, or dedicated line networks may also be used.

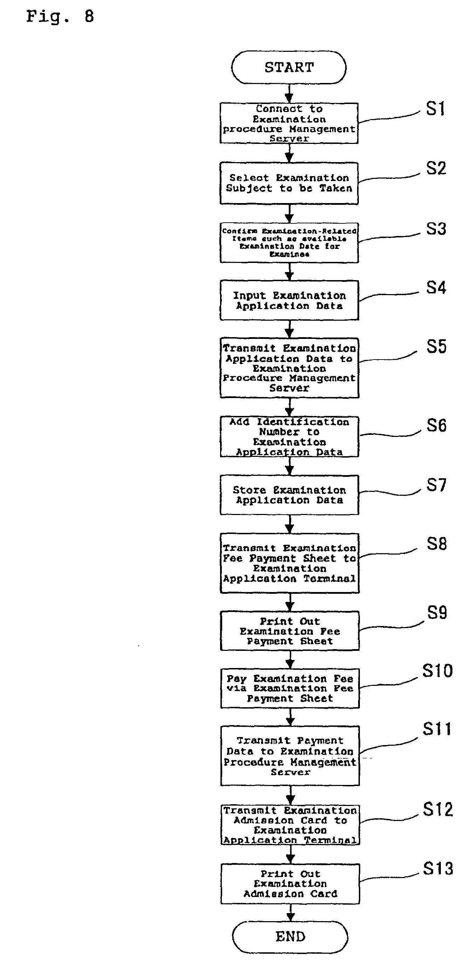

Subsequently, an operation of the examination procedure management system 10 will be explained. Fig. 8 is a flow chart of an operation of a system to which the method for performing examination procedure according to preferred embodiments of the present invention is applied.

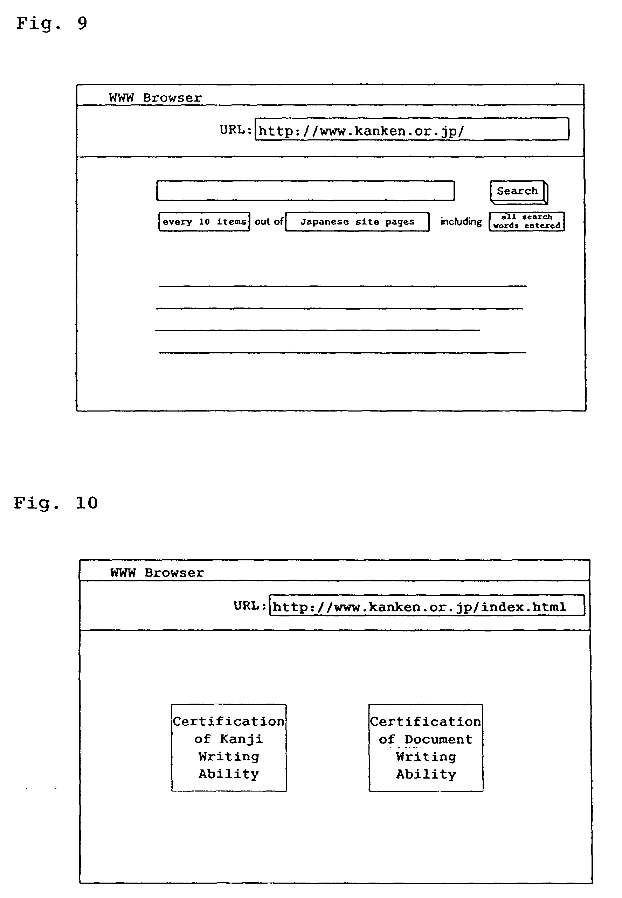

For an examinee to carry out an examination procedure, the examination application terminal 12 is connected to the examination procedure management server 34 (step S1). To carry out the connection, the WWW browser application 28a is activated and, as shown in Fig. 9, the desired URL (Uniform Resource Locater) of the examination procedure management server, for instance, http://www.kanken.or.jp/ is entered in the URL input box.

Subsequently, the examinee selects the desired examination subject from a list of examination subjects, such as "Certification of Kanji Writing Ability" or "Certification of Document Writing Ability" displayed on the menu screen within the WWW browser application 28a, as shown in Fig. 10, using input instruments such as a mouse, a keyboard or a touch panel (step S2). In this case, each page displayed on these examination application terminals 12 is displayed by transmitting data stored as HTML documents within the storage unit 48 of the examination procedure management server 34 to the examination application terminal 12 via the HTTP server application 48a. Furthermore, the types of examination subjects to be displayed on the menu screen increases or decreases depending on the types of the examination subjects for which an examination procedure is handled by the examination procedure management server 34.

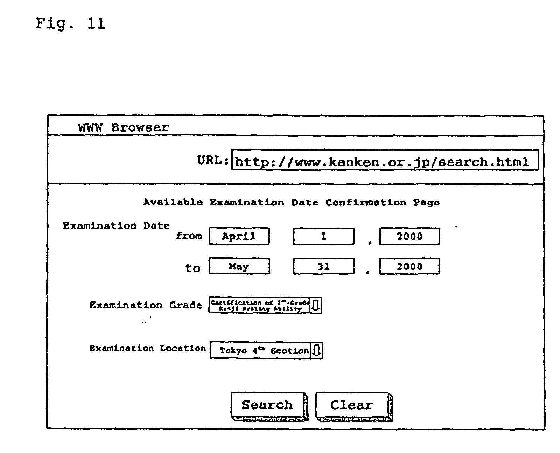

After the selection of the examination subject, within the WWW browser application 28a, as shown in Fig. 11, a confirmation page for confirming available examination dates, etc. are displayed. In the confirmation page for confirming available examination dates, etc. by entering desired search criteria in the examination conditions input boxes for "examination grade," "examination date," "examination location" and pushing the "search" button provided within the page, the searched items such as an examination date matching the inputted search criteria are displayed for confirmation (step S3). The extraction function provided in the confirmation page for confirming, for example, an available examination date is performed by utilizing search and extraction functions provided to the examination application database 48b via CGI. Conditions data such as scheduled examination dates, examination grades to be tested at the corresponding examination dates, examination locations where the examination will be held (examination site), and maximum number of examinees to be accommodated in each of the corresponding examination locations are previously inputted to the examination application database 48b by an examination implementor. The examination dates, etc., matching the inputted search criteria are extracted with reference to the conditions data. It is not necessarily required that the search criteria such as examination date be entered in the examination conditions input boxes. In this case, the examination application terminal 12 is constructed to extract and display all of the available examination dates when the terminal is connected to the examination procedure management server 34.

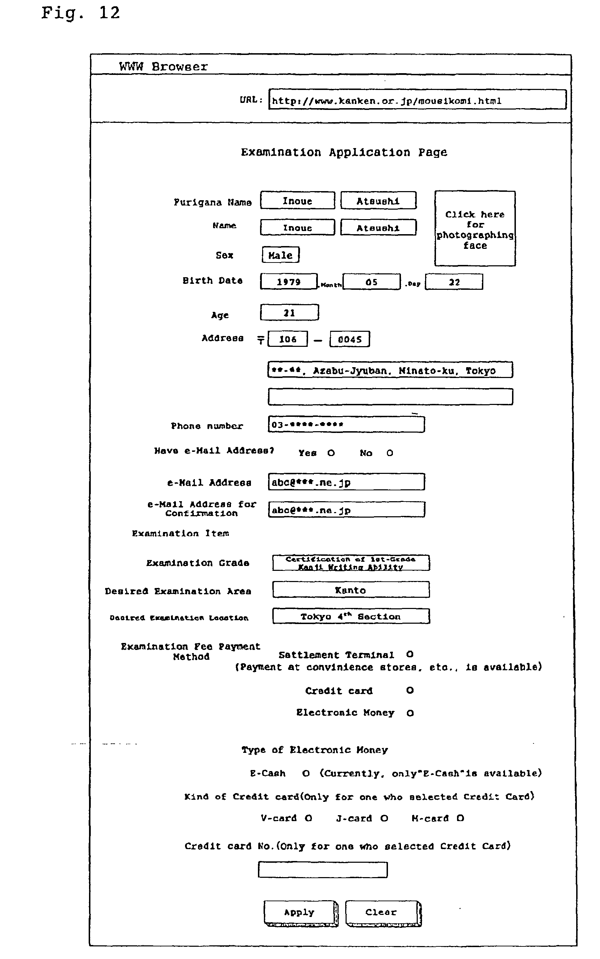

After the confirmation of the available examination date or other criteria, the examinee clicks an examination application button (not shown) displayed on the page and then an examination application page is displayed, as shown in Fig. 12. The examination application page is a page for entering examination application data including, for example, information identifying an examinee such as name or image data of the examinee's face, examination conditions (examination grade, examination date, examination location, etc.) and examination fee payment method. The examinee inputs examination application data by entering the necessary items in the related input boxes provided in the examination application page (step S4).

The following explanation describes the case where "settlement terminal" is selected as a payment method in the examination application page.

The examinee enters the necessary items in the input boxes provided in the examination application page and clicks "apply" button displayed in the page, thereby transmitting the examination application data to the examination procedure management server 34 (step S5).

The examination application data transmitted from the examination application terminal 12 is received by the examination procedure management server 34. Then, a receipt number is added thereto by the examination application database 48b (step S6). The receipt number is identification information added to each examination application data and the receipt number is unique and different from other receipt numbers. The examination application data with the receipt number added thereto is processed in the examination procedure management server 34 based on the added receipt number.

The examination application data with the receipt number added thereto is recorded in the examination application database 48b (step S7). At this stage, a flag such as "X" indicating the status of incomplete payment of examination fee is written as a record to the data indicating "payment status" included in each examination application data.

Subsequently, the examination application database 48b creates print data, into which the receipt number added in step S6 is incorporated in barcode form, within the form data of examination fee payment sheet stored in the database. The created print data of examination fee payment sheet is transmitted over the network 100 to the examination application terminal 12 via the HTTP server application 48a (step S8).

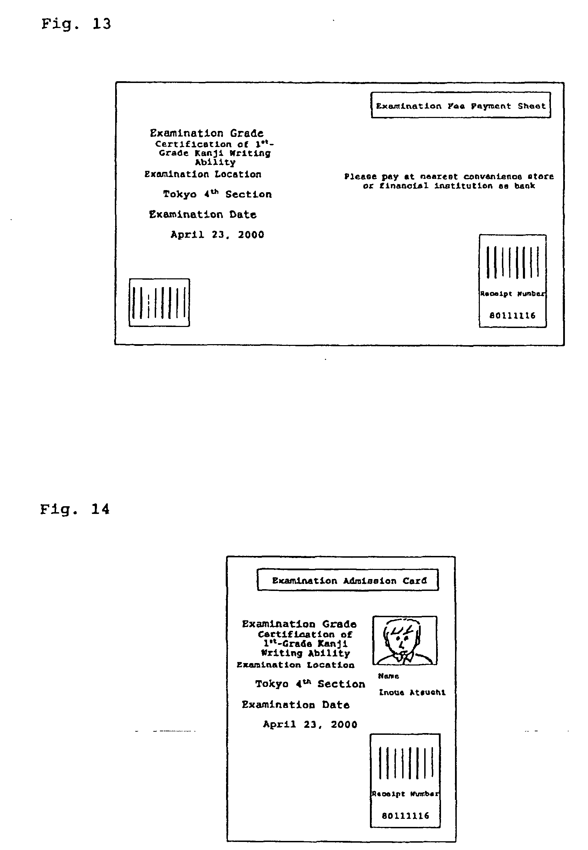

The examinee prints out the examination application sheet, as shown in Fig. 13, based on the received print data of an examination application sheet by utilizing the viewer application 28b and the printer 22 (step S9).

The examinee who printed out the examination fee payment sheet effects payment of examination fee using the examination fee payment sheet via the settlement terminal 54 (step S10). When the payment is made, the receipt number in barcode form is read by the barcode scanner 74, whereby the settlement terminal 54 recognizes which examination application data corresponds to the completed examination fee payment.

The settlement terminal 54 transmits payment data including the receipt number of examination application data, which is recognized when the examination fee payment is made, and a payment flag indicating the completion of payment over the network 100 to the examination procedure management server 34 (step S11).

When the payment data is received by the examination procedure management server 34, the payment status data of the examination application data corresponding to the receipt number is rewritten by the examination application database 48b to a flag such as "O" indicating the completion of payment, as shown in Fig. 6. Subsequently, the examination application database 48b storing the form data of an examination admission card therein creates print data incorporated within the form data to display examination conditions such as name and face of an examinee, contents of examination to be taken and examination date, which are included in the examination application data corresponding to the received payment data. The created print data of the examination admission card is transmitted over the network 100 to the examination application terminal 12 via the HTTP server application 48a (step S12).

The examinee prints out the examination admission card, as shown in Fig. 14, based on the received print data of the examination admission card by utilizing the viewer application 28b and the printer 22, and thus completes the examination procedure (step S13).

As described above, without complicated operations, such as confirmation of examination fee payment as in the conventional method, the examination procedure management system of preferred embodiments of the present invention provides a convenient examination procedure such that the examination admission card is issued in a greatly simplified manner. It should be noted that it is desirable to take measures to prevent altering of the print data of an examination admission card, or to prevent a situation where a person who intends to fraudulently take an examination obtains print data of an examination admission card in a unauthorized way and alters the print data to take examination.

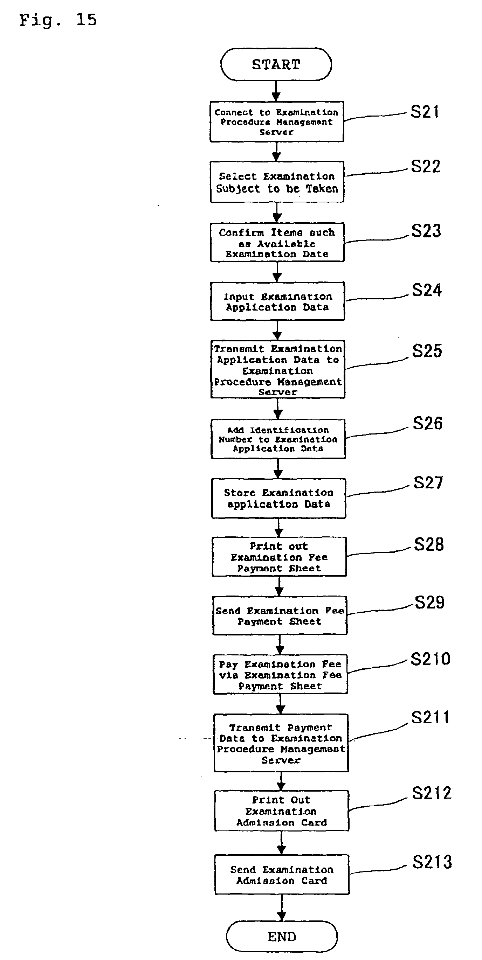

In the above-described explanation, although the examination procedure is performed following the flow chart shown in Fig. 8, the examination procedure according to preferred embodiments of the present invention is not limited to the above-described flow chart, and alternatively, may be performed following the flow chart shown in Fig. 15. Fig. 15 is a flow chart of an alternative operation of a system to which the method for performing examination procedure according to preferred embodiments of the present invention is applied.

The flow chart shown in Fig. 15 is different from the flow chart shown in Fig. 8 in the steps for delivering an examination fee payment sheet and an examination admission card to an examinee. More specifically, the procedure from step S21 to step S27 shown in Fig. 15 is performed similarly to that from step S1 to step S7 shown in Fig. 8.

In the flow chart shown in Fig. 15, however, printing out of an examination fee payment sheet and an examination admission card is not performed at the examination application terminal 12, but, as shown in steps S28 and S212, an examination fee payment sheet and an examination admission card are printed out at the examination procedure management server 34. The examination fee payment sheet and the examination admission card, both of which are printed out at the examination procedure management server 34, are delivered to an examinee by an appropriate method as shown in steps S29 and S213. Furthermore, in this flow chart shown in Fig. 15, printing of the examination fee payment sheet is performed each time the examination application data is stored in the examination application database 48b or may be performed all at once after the examination application data are accumulated for a certain period of time. In addition, printing of the examination admission card may be performed each time the payment data is received by the examination procedure management server 34 or may be performed all at one time after the payment data are accumulated for a certain period of time.

When the examination procedure is performed following the flow chart shown in Fig. 15, unlike in Fig. 8, an examinee who cannot print the examination fee payment sheet and the examination admission card at the examination application terminal 12 can easily complete the examination application.

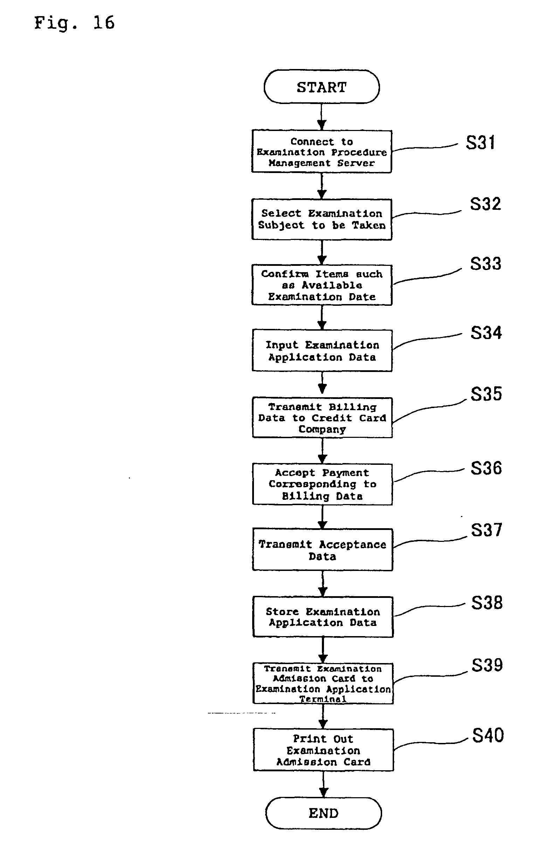

The examination procedure according to preferred embodiments of the present invention is not limited to the above-described examination procedure and alternatively, may be performed following the flow chart shown in Fig. 16. Fig. 16 is a flow chart of still another alternative operation of a system to which the method for performing examination procedure according to preferred embodiments of the present invention is applied.

The flow charts shown in Fig. 16 and Fig. 8 are different from each other in the steps where the operation for paying examination fee is performed. To be specific, the procedure from step S31 to step S34 is performed similarly to that from step S1 to step S4 shown in Fig. 8. In step S34, "credit card" is selected as an examination fee payment method in the examination application page and then, "kind of credit card" and "credit card No." are appropriately selected and entered as examination application data (step S34).

Thereafter, the billing amount data including data indicating the amount of the examination fee an examinee has to pay, together with the data indicating "name" and "credit card No." included in the examination application data, is transmitted from the examination procedure management server 34 to, although not shown, an online approval system of a credit card company (step S35). The online approval system is a system for confirming whether or not a credit card company accepts the payment by a credit card owner via a credit card, which is currently the most common payment method.

When the credit company accepts the payment of the billing amount data (step S36), approval data to which an appropriate flag indicating the acceptance of the payment of the billing amount data is added is transmitted to the examination procedure management server 34 (step S37). Then, the examination procedure management server 34 that has received the approval data stores the corresponding examination application data in the examination application database 48b (step S38). Although in this preferred embodiment, the approval data is defined by adding a flag indicating the acceptance of the payment to the billing data, the approval data is not limited to the above-described construction and may be defined by other appropriate formats.

Thereafter, the examination procedure management server 34 creates print data of an examination admission card based on the examination application data stored therein and transmits the print data over the network 100 to the examination application terminal 12 via the HTTP server application 48a (step S39).

Finally, the examinee prints out an examination admission card that is defined by the received print data of the examination admission card by utilizing the viewer application 28b and the printer 22, thus completing the examination procedure, as shown in Fig. 14 (step S40).

When the examination procedure is performed following the flow chart shown in Fig. 16, compared with the case in Fig. 8, the transmission operation of the print data of an examination fee payment sheet from the examination procedure management server 34 to the examination application terminal 12, the printing operation of the examination fee payment sheet at the examination application terminal 12 and the payment operation for performing payment by using the examination fee payment sheet in the settlement terminal 54 are omitted, whereby the procedure of the examination application is performed quickly and easily. In addition, when all examination application terminals 12 perform the above-described operations to perform the examination procedure, the settlement terminal 54 is omitted to produce a simplified system configuration.

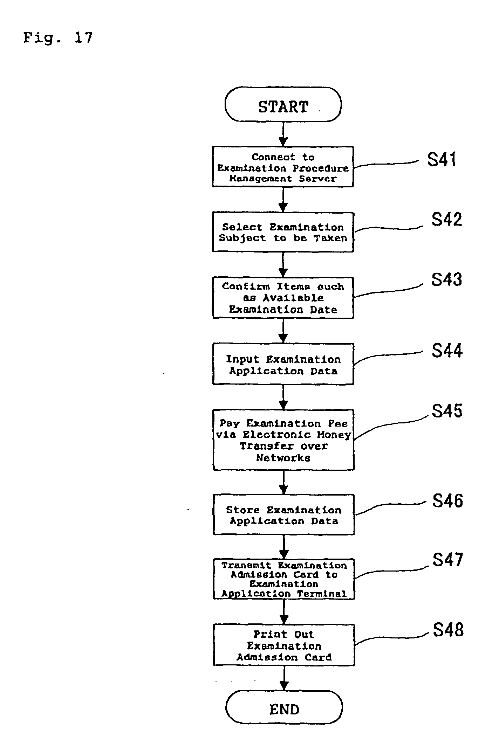

Additionally, in preferred embodiments of the present invention, the examination procedure may be performed following the flow chart shown in FIG. 17. FIG. 17 is a flow chart of an alternative operation of a system to which the method for performing examination procedure according to preferred embodiments of the present invention is applied.

The flows shown in Fig. 17 and Fig. 8 are different from each other in the steps where the operation for paying examination fee is performed. To be specific, the procedure from step S41 to step S44 is performed similarly to that from step S1 to step S4 shown in Fig. 8. In step S44, "electronic money" is selected as an examination fee payment method in the examination application page and then, the data related to the payment method is entered in the examination application data (step S44). In this case, the operation for payment of the examination fee using the examination fee payment sheet via the settlement terminal 54 is not performed and instead, the operation for payment of the examination fee via the electric money transfer over networks is performed (step S45).

In this case, the application for managing electronic money transfer over networks is installed in the examination application terminal 12 and the examination procedure management server 34. In this preferred embodiment, although "e-cash" developed by DigiCash B.V. is used for electronic money transfers over networks, the type of electronic money transfer used in the present invention is not limited to the above-stated "e-cash" and other electronic money transfer over networks may be used. That is, in the present invention, electronic money transfer via IC in which a payer actually comes over to the payment window and effects payment via IC card is not used, but electronic money transfer in which all payment processing is performed over networks is used.

When the examination procedure is performed following the flow chart shown in Fig. 17, as compared with the flow chart shown in Fig. 16, the transmission operation of the print data of an examination fee payment sheet from the examination procedure management server 34 to the examination application terminal 12, the printing operation of the examination fee payment sheet at the examination application terminal 12 and the payment operation for performing payment by using the examination fee payment sheet in the settlement terminal 54 are omitted, whereby the procedure of the examination application is performed quickly and easily. In addition, when all examination application terminals 12 perform the above-described operations to perform the examination procedure, the settlement terminal 54 is omitted, which further simplifies the system configuration. Additionally, unlike the flow chart shown in Fig. 16, there is no danger of hacking of the credit card number by a third person and therefore, an examination application is securely and safely performed.

Although in preferred embodiments described above, the examination application terminal 12 is defined by a personal computer or a workstation, the terminal is not limited to the above-described configuration and may be defined by, for example, a cellular phone or a PDA (Personal Digital Assistance) via which various data is input. In this case, the communication device as an examination application terminal having the functions of transmitting and receiving data between the examination procedure management server 34 via the network 100 is preferably used.

Additionally, it is desirable that the examination application terminal being capable of photographing the appearance of an examinee's face be used.

Furthermore, although it is desirable that the examination application terminal 12 is available to each examinee, the location of terminal is not limited to the above-described location and for instance, the terminal may provided in each examination location, convenience stores, various financial institutions or various public facilities for use by the general public.

Moreover, in preferred embodiments described above, although data communication with the examination procedure management server is preferably performed via the HTTP protocol utilizing services provided by the HTTP server application 48, the data communication is not limited to the above-described communication method and may be performed via any appropriate communication protocol, such as TELNET, capable of transmitting and receiving data.

Additionally, in preferred embodiments described above, although an examinee's face is preferably photographed by the camera 31 and input to the input unit, the operation for inputting the examinee's photographed face is not limited to the above-described input method and may be performed by scanning a previously photographed picture using a scanner and then, entering the scanned picture in the input unit, or by using the image data of photograph previously stored in a suitable image file format.

Furthermore, in the case where the camera 31 is not connected to the examination application terminal 12 and the data to be obtained by photographing the examinee's face cannot be transmitted as examination application data, a sheet for sending a photograph may be delivered together with an examination fee payment sheet to an examinee for returning a photograph of an examinee's face or the image data thereof.

In preferred embodiments described above, although the image data of an examinee's face is preferably entered when the examination application data is entered, if identification of an examinee is not performed by the image data of the examinee's face, the image data of the examinee's face need not be entered.

Furthermore, in preferred embodiments described above, although the examination application terminal 12 must first be connected to the examination procedure management server 34 and receives page data (HTML data) for entering the examination application data, the operation for obtaining the page data is not limited to the above-stated operation and may be performed by previously storing the data in the examination application terminal 12.

Moreover, in preferred embodiments described above, although the receipt number defining identification information is added solely by the examination procedure management server 34, the operation for adding the receipt number is not limited to the above-described operation and may be performed such that an examination application terminal 12 installed as a dedicated machine adds receipt numbers defining individual identification information that are unique and different from each other throughout the whole reception.

The flow of examination procedure according to the present invention is not limited to the flow shown in Figs. 8, 15, 16 and 17, and may be constructed by combining the steps disclosed in these figures.

### INDUSTRIAL APPLICABILITY

As described above, according to preferred embodiments of the present invention, the number of operations that must be performed by both the examinee and the examination implementor are greatly reduced, and therefore, the examination procedure is performed quickly and securely.

## Claims

1. A method for performing an examination procedure over a network by utilizing an examination application terminal for performing examination application and an examination procedure management server for performing examination procedure processing, the method comprising:
a step of transmitting examination application data including at least information identifying an examinee, information specifying a desired examination date, information specifying a desired examination location and information specifying an examination fee payment method from said examination application terminal to said examination procedure management server; and
a step of outputting an examination admission card when examination fee payment processing corresponding to said examination application data is completed, said examination admission card including information identifying said examinee included in said examination application data corresponding to said examination fee payment processing being completed.

2. A method for performing an examination procedure according to claim 1, wherein said examination fee payment processing is performed via electronic money transfer over a network.

3. A method for performing an examination procedure according to claim 1 or 2, wherein said step of outputting said examination admission card when said examination fee payment processing corresponding to said examination application data is completed, said examination admission card including said information identifying said examinee included in said examination application data corresponding to said examination fee payment processing being completed, includes a step of transmitting print data of said examination admission card to display said information identifying said examinee to said examination application terminal and a step of printing out said examination admission card based on said print data at said examination application terminal.

4. A method for performing an examination procedure according to claim 1 or 2, wherein said examination application data includes information specifying a mailing address of said examination admission card, and said step of outputting said examination admission card when said examination fee payment processing corresponding to said examination application data is completed, said examimation admission card including said information identifying said examinee included in said examination application data corresponding to said examination fee payment processing being completed, includes a step of printing out said examination admission card at said examination procedure management server.

5. A method for performing an examination procedure over a network utilizing an examination application terminal for performing examination application, an examination procedure management server for performing examination procedure processing and a settlement terminal for performing examination fee payment processing, the method comprising:
a step of inputting examination application data including at least information identifying an examinee, information specifying a desired examination date and information specifying a desired examination location from said examination application terminal;
a step of adding individual identification information that is unique and different from other individual identification information to said examination application data;
a step of recording said examination application data with said identification information added thereto;
a step of informing said examinee of said identification information;
a step of inputting said identification information to said settlement terminal and, at the same time, when examination fee payment processing is completed, transmitting payment data including said identification information and data indicating said examination fee payment processing being completed from said settlement terminal to said examination procedure management server; and
a step of outputting an examination admission card describing said information identifying said examinee included in said examination application data corresponding to said payment data transmitted from said settlement terminal.

6. A method for performing examination procedure according to claim 5, further comprising a step of transmitting said examination application data to said examination procedure management server, wherein said step of adding said individual identification information that is unique and different from each other to said examination application data and said step of recording said examination application data with said identification information added thereto are performed by said examination procedure management server.

7. A method for performing examination procedure according to claim 6, wherein said step of informing said examinee of said identification information is performed by transmitting said identification information from said examination procedure management server to said examination application terminal.

8. A method for performing examination procedure according to claim 5, wherein said step of adding said individual identification information that is unique and different from each other to said examination application data, said step of recording said examination application data with said identification information added thereto and said step of informing said examinee of said identification information are performed in said examination application terminal, and said method further includes a step of transmitting said examination application data with said identification information added thereto to said examination procedure management server.

9. A method for performing examination procedure according to any one of claims 5 to 8, wherein said step of informing said examinee of said identification information includes a step of printing out an examination fee payment sheet describing said identification information.

10. A method for performing examination procedure according to any one claims 5 to 9, wherein said examination application data includes information specifying a mailing address of an examination fee payment sheet, and said step of informing said examinee of said identification information includes a step of sending said examination fee payment sheet to said examinee.

11. A method for performing examination procedure according to claim 9 or 10, wherein said identification information is provided in said examination fee payment sheet in barcode form.

12. A method for performing examination procedure according to any one of claims 5 to 11, wherein said step of outputting said examination admission card describing said information identifying said examinee included in said examination application data corresponding to said payment data transmitted from said settlement terminal, includes:
a step of transmitting print data of said examination admission card to display said information identifying said examinee to said examination application terminal; and
a step of printing out said examination admission card based on said print data at said examination application terminal.

13. A method for performing examination procedure according to any one of claims 5 to 11, wherein said examination application data includes information specifying a mailing address of said examination admission card, and said step of outputting said examination admission card describing said information identifying said examinee included in said examination application data corresponding to said payment data transmitted from said settlement terminal includes:
a step of printing out said examination admission card in a form that is formatted for said examination admission card to display said information identifying said examinee; and
a step of sending said outputted examination admission card to said examinee.

14. A method for performing examination procedure according to any one of claims 1 to 13, further comprising a step of extracting an examination date and an examination location that is available for said examinee to take examination, and transmitting results of said extracting step to said examination application terminal.

15. A method for performing examination procedure according to any one of claims 1 to 14, wherein said step of inputting said examination application data includes a step of inputting data including an examinee's physical appearance.

16. A method for performing examination procedure according to claim 15, wherein said data including said examinee's physical appearance is data obtained by photographing the examinee's face.

17. A method for performing examination procedure according to claim 15 or 16, wherein said data including said examinee's physical appearance is included in said information identifying said examinee in said step of outputting said examination admission card describing said information identifying said examinee corresponding to said payment data received by said examination procedure management server.
